# FASCICULE DE BREVET EUROPEEN

(11) **EP 1 363 831 B1**
(45) Date de publication et mention de la délivrance du brevet: **14.11.2007**
(21) Numéro de dépôt: 02708432.6
(22) Date de dépôt: 01.03.2002
(51) Int. Cl.: B62K 25/28

(54) **SUSPENSION ARRIERE D'UN VEHICULE AVEC UNE ROUE MOTRICE PORTEE PAR UN BRAS OSCILLANT**
FAHRZEUGHINTERRADAUFHÄNGUNG MIT ANTRIEBSRADSCHWINGARM
REAR SUSPENSION OF A VEHICLE WITH DRIVE WHEEL BORNE BY AN OSCILLATING ARM

(30) Priorité: 01.03.2001 FR 0102778
(43) Date de publication de la demande: 26.11.2003
(73) Titulaire: Lesage, Philippe, 77190 Dammarie Les Lys (FR); Cycles Lapierre, 21005 Dijon (FR)
(72) Inventeur: LESAGE, Philippe, F-77190 Dammarie Les Lys (FR); ANTONOT, Emmanuel, F-21490 Clenay (FR)
(74) Mandataire: Tetaz, Franck Claude Edouard
(86) Numéro de dépôt international: PCT/FR2002/000736
(87) Numéro de publication internationale: WO 2002/070332

(56) Documents cités:
- EP-A- 1 026 073
- DE-U- 9 416 803
- DE-U- 29 909 626
- FR-A- 2 774 966
- FR-A- 2 776 981
- US-A- 5 409 249
- US-A- 5 452 910
- US-A- 5 791 674

## Description

La présente invention concerne une suspension arrière d'un véhicule tel qu'une bicyclette, une moto ou analogue, du type comportant un châssis que l'on appellera par la suite cadre, un bras oscillant solidaire du cadre et portant l'axe du moyeu d'une roue arrière motrice et un amortisseur dont les extrémités sont solidaires respectivement du cadre et du bras oscillant, ladite suspension procurant un effet "anti-pompage" et laissant l'espace entre la selle et la roue arrière dégagé pour permettre la fixation d'un garde boue, d'un porte-bagages ou similaire.

Dans le domaine du vélo tout terrain dit VTT, on connaît bien des suspensions arrières comprenant un bras oscillant articulé dans la partie inférieure du tube de selle coopérant avec un amortisseur. C'est le cas, par exemple, du vélo "XC FULL" commercialisé par la Société LAPIERRE; le bras oscillant pivote autour d'un axe fixe parallèle à l'axe du pignon menant qui est porté par le boîtier de pédalier positionné à l'intersection du tube oblique et du tube de selle. De plus, les extrémités de l'amortisseur sont solidaires du bras oscillant et respectivement du tube horizontal reliant le tube de selle à la fourche du vélo ou d'un tube intermédiaire s'étendant globalement du boîtier de pédalier au tube horizontal, ledit tube de selle étant interrompu pour laisser le passage à l'amortisseur.

Ce type de suspension arrière présente l'inconvénient d'encombrer la partie arrière du vélo, c'est-à-dire l'espace entre la roue arrière et la selle, de sorte qu'il n'est pas possible d'installer un garde boue arrière, provoquant ainsi diverses projections de boue, d'eau, etc .-, sur le dos du cycliste en cas de pluie, par exemple. Par ailleurs, une telle suspension arrière provoque, sous l'action d'un coup de pédale énergique, tel qu'un coup de pédale pour relancer le vélo ou lorsque le cycliste adopte la position dite "en danseuse", debout sur les pédales, lors du gravissement d'une côte, etc .-, un effet dit "de pompage" qui se traduit par un enfoncement cyclique de la suspension même sur un sol bien nivelé. Ainsi, outre le désagrément de conduite du vélo, une partie du couple moteur fourni par le cycliste se dissipe dans l'amortisseur au lieu de participer à la motricité du vélo.

En effet, dans ce type de suspension arrière, le brin tendu supérieur de la chaîne de transmission s'étendant entre le pignon menant, porté par le boîtier de pédalier, et le pignon mené, solidaire de la roue arrière motrice, s'étend au-dessus de l'axe de rotation du bras oscillant par rapport au cadre créant ainsi un couple proportionnel à la tension du brin supérieur et à la distance séparant le brin supérieur de la chaîne du centre de rotation du bras oscillant qui tend à faire pivoter le bras oscillant vers le haut comprimant ainsi l'amortisseur lorsque le cycliste appuie sur les pédales, le vélo étant en position d'équilibre statique, c'est-à-dire lorsqu'il est chevauché par un cycliste. Lorsque le couple moteur appliqué par le cycliste sur les pédales est relativement faible et constant, le couple appliqué au bras oscillant et par conséquent, l'enfoncement de l'amortisseur sont également faibles et constants de sorte que le cycliste ne perçoit pas d'effet de pompage bien qu'une partie du couple moteur soit dissipé dans l'amortisseur réduisant ainsi l'efficacité de son pédalage. Toutefois, lorsque le cycliste donne un coup de pédale pour relancer le vélo ou lorsque le cycliste est en position debout sur les pédales, dite "en danseuse", la position du centre de gravité de l'ensemble vélo/cycliste varie ; ce qui provoque un mouvement oscillatoire vertical du cadre du vélo de sorte que le couple moteur augmente brutalement, provoquant une augmentation du couple appliqué sur le bras oscillant qui comprime l'amortisseur et fait alors apparaître l'effet de pompage très vite perceptible par le cycliste. Ainsi, lors d'un pédalage énergique, le couple moteur augmente fortement et devient cyclique provoquant à chaque coup de pédale une augmentation du couple appliqué sur le bras oscillant qui comprime l'amortisseur et fait alors apparaître l'effet de pompage, ce dernier se caractérisant par un mouvement parasite alternatif de compression des suspensions avant et arrière du vélo en rythme avec la fréquence de pédalage qui gène le cycliste.

Afin de remédier à cet inconvénient, on a déjà imaginé une suspension arrière pour vélo procurant un effet dit "anti-pompage" ; c'est le cas, par exemple, du brevet français FR 2.774.966 déposé par le Demandeur décrivant une suspension arrière de vélo comportant un bras oscillant guidé par deux biellettes. Les deux biellettes ont une orientation définie de telle manière que l'intersection de leur axe respectif passant par le centre de leurs deux pivots, ladite intersection matérialisant le centre instantané de rotation dudit bras oscillant, soit située dans le quadrant antérieur supérieur du repère défini par un axe horizontal et un axe vertical concourant au centre du boîtier de pédalier, et sont articulées sur ledit bras oscillant en deux endroits notablement éloignés l'un de l'autre. La suspension comprend, par ailleurs, un amortisseur dont les extrémités sont respectivement solidaires du bras oscillant et du tube de selle, ledit amortisseur s'étendant globalement parallèlement audit tube de selle à l'arrière de ce dernier.

Bien que ce type de suspension procure un effet anti-pompage, il présente l'inconvénient d'encombrer la partie arrière du vélo de sorte qu'il n'est pas possible d'installer un garde-boue arrière, un porte-bagages ou analogue. Par ailleurs, bien que ce type de suspension procure un effet anti-pompage particulièrement efficace, il présente néanmoins l'inconvénient de procurer une rigidité insuffisante de l'ensemble cadre/suspension qui, lorsque le vélo est sollicité de manière intensive, nuit au comportement général du vélo rendant le vélo inconfortable.

L'un des buts de l'invention est donc de remédier à ces inconvénients en proposant une suspension arrière de vélo ou analogue constituée d'un bras oscillant reliant l'axe de la roue arrière au montant du cadre et un amortisseur dont les extrémités sont solidaires respectivement du cadre et du bras oscillant, ledit cadre et/ou le bras oscillant comprenant des moyens permettant de dégager l'espace entre la selle et la roue arrière pour permettre la fixation d'un garde-boue arrière ou d'un porte-bagages par exemple, tout en procurant un effet anti-pompage.

A cet effet, et conformément à l'invention, le système anti-pompage d'une suspension arrière d'un véhicule, tel qu'une bicyclette, une moto ou analogue, du type comportant un châssis, un bras oscillant solidaire du châssis portant l'axe du moyeu d'une roue motrice et un amortisseur dont les extrémités sont solidaires respectivement du châssis et du bras oscillant, le couple moteur étant transmis à la roue motrice par une chaîne s'étendant entre un pignon menant solidaire du châssis et un pignon mené solidaire de l'axe du moyeu de la roue motrice, ladite chaîne entre les pignons menants et menés formant deux brins, l'un supérieur tendu qui transmet le couple moteur à la roue motrice et l'autre inférieur, dit de retour, le châssis constitué d'un tube de selle globalement vertical, d'un tube horizontal et d'un tube oblique, le tube horizontal et le tube oblique étant solidaires d'un tube de direction recevant une fourche et l'axe du pignon menant étant positionné à l'intersection du tube de selle et du tube oblique et/ou le bras oscillant comprenant des moyens pour que le brin supérieur de la chaîne de transmission ou la droite le prolongeant, passe par le centre instantané de rotation C du bras oscillant, lorsque le véhicule est en position d'équilibre statique, et que ledit brin supérieur de la chaîne soit situé en dessous du centre instantané de rotation C du bras oscillant lorsque le moyeu de la roue motrice se situe au-dessus de sa position de référence Pr correspondant à la position de l'axe du moyeu de la roue motrice lorsque le véhicule est en position d'équilibre statique. La suspension arrière est remarque en ce que le bras oscillant est solidarisé par au moins deux moyens d'articulation au châssis dont l'intersection des droites D1,D2 passant par les axes de rotation de chaque moyen d'articulation est située dans le quadrant postérieur supérieur d'un repère défini par un axe horizontal H et un axe vertical v concourant à l'axe du pignon menant et en ce que les extrémités de l'amortisseur sont solidaires respectivement du bras oscillant ou du moyen d'articulation solidarisant le bras oscillant au tube oblique et à une patte soudée à l'un des tubes du châssis ladite patte s'étendant dans le plan contenant les tubes du châssis, ledit amortisseur s'étendant devant le tube oblique, c'est-à-dire entre le tube oblique et la fourche portant la roue avant, globalement parallèlement à ce dernier ou entre les tubes constituant le châssis dans le plan contenant ces derniers.

On comprend bien que, lorsque le véhicule roule sur un sol parfaitement nivelé, le brin supérieur de la chaîne de transmission passant par le centre instantané de rotation du bras oscillant, c'est-à-dire le centre de rotation du bras oscillant à chaque instant t l'intégralité du couple moteur est transmise à la roue motrice et que, lorsque le cycliste change de rythme et effectue une relance par exemple, le brin supérieur de la chaîne étant situé en dessous du centre instantané de rotation du bras oscillant, un moment de rappel proportionnel à la tension du brin supérieur de la chaîne et à la distance séparant le brin supérieur et le centre instantané de rotation du bras oscillant, se crée tendant à ramener le bras oscillant dans sa position initiale. Ce moment de rappel se crée à chaque coup de pédale énergique du cycliste évitant ainsi l'apparition de l'effet de pompage. Il est bien évident que, lors du franchissement d'un obstacle, le moment de rappel s'ajoute à l'effort de rappel de l'amortisseur améliorant notablement la motricité, en côte par exemple. Par ailleurs, contrairement aux enseignements du brevet français FR 2.774.966 où le centre instantané de rotation du bras oscillant est situé dans le quadrant antérieur supérieur du vélo, la position du centre instantané de rotation dans le quadrant postérieur supérieur et la position de l'amortisseur sur le tube oblique du vélo procurent une plus grande rigidité de l'ensemble cadre/suspension et permet de libérer l'espace entre la roue arrière et la selle afin d'installer un garde-boue arrière, un porte-bagages ou analogue.

Selon une caractéristique particulièrement avantageuse de la suspension arrière conforme à l'invention, le centre instantané de rotation du bras oscillant se déplace globalement suivant une droite perpendiculaire au brin supérieur de la chaîne lorsque l'axe du moyeu de la roue motrice se déplace, de telle sorte que le moment de rappel soit proportionnel au déplacement de l'axe du moyeu de la roue motrice.

D'autres avantages et caractéristiques ressortiront mieux de la description qui va suivre de plusieurs variantes d'exécutions, données à titre d'exemples non limitatifs, de la suspension arrière conforme à l'invention en référence aux dessins annexés sur lesquels :
- la figure 1 est une vue de côté d'une bicyclette équipée d'une suspension arrière conforme à l'invention,
- la figure 2 est une vue partielle de côté d'une première variante d'exécution d'une suspension arrière conforme à l'invention équipant une bicyclette,
- la figure 3 est une vue partielle de côté d'une seconde variante d'exécution d'une suspension arrière conforme à l'invention équipant une bicyclette,
- la figure 4 est une vue partielle de côté d'une troisième variante d'exécution d'une suspension arrière conforme à l'invention équipant une bicyclette,
- la figure 5 est une vue partielle de côté d'une quatrième et dernière variante d'exécution d'une suspension arrière conforme à l'invention équipant une bicyclette,
- la figure 6 est une représentation partielle et schématique d'une bicyclette équipée d'une suspension arrière conforme à l'invention représentée en position à vide,
- la figure 7 est une représentation partielle schématique d'une bicyclette équipée d'une suspension arrière conforme à l'invention en position d'équilibre statique,
- la figure 8 est une représentation partielle schématique d'une bicyclette comprenant une suspension arrière conforme à l'invention lors de la naissance d'un mouvement de pompage.

En référence aux figures, on décrira à titre d'exemple non limitatif, une suspension arrière d'une bicyclette du type vélo tout terrain.

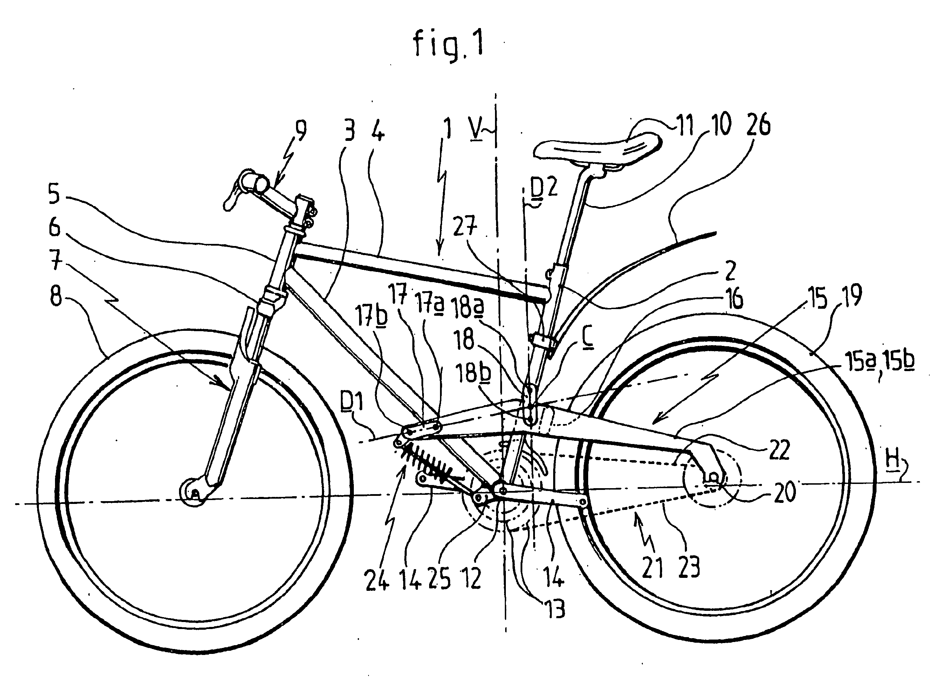

A cet égard, on a représenté sur la figure 1 une vue générale de côté d'une bicyclette comprenant un châssis dit cadre triangulé 1 constitué d'un tube de selle 2 globalement vertical, d'un tube oblique 3 assemblé par soudage à l'extrémité inférieure du tube de selle 2 et un tube horizontal 4 assemblé à l'extrémité supérieure du tube de selle 2 et à un tube de fourche 5 globalement vertical, le tube oblique 3 étant, par ailleurs, solidarisé audit tube de fourche 5 par soudage. Ce dernier porte une fourche 6 comprenant une suspension 7 du type télescopique portant à son extrémité inférieure l'axe du moyeu de la roue avant 8. Un guidon 9 est, de manière classique, solidarisée à l'extrémité supérieure de la fourche 6 pour assurer la direction de la bicyclette. De plus, le tube de selle 2 est apte à recevoir une tige de selle 10 comprenant à son extrémité supérieure une selle 11 sur laquelle prend position le cycliste. L'extrémité inférieure du tube de selle 2, et plus précisément à l'intersection du tube oblique 3 et du tube de selle 2, comprend un boîtier de pédalier 12 portant l'axe des pignons menants 13 communément appelés plateaux, dont les axes de rotation sont coaxiaux, des pédales 14 étant solidaires dudit axe des pignons menants, de part et d'autre du cadre 1 de la bicyclette.

La bicyclette comprend, par ailleurs, un bras oscillant 15 constitué de deux demi-bras 15a et 15b s'étendant horizontalement de part et d'autre du cadre 1, lesdits demi-bras 15a et 15b étant reliés par une ou plusieurs entretoises 16. Le bras oscillant 15 est solidarisé au cadre 1 par deux biellettes 17 et 18, la biellette 17 comprenant deux axes de rotation 17a et 17b respectivement solidaires du tube oblique 3 et du bras oscillant 15 et la biellette 18 comprenant également deux axes de rotation 18a et 18b respectivement solidaires du tube de selle 2 et du bras oscillant 15. Par ailleurs, le bras oscillant 15 porte à son extrémité libre l'axe du moyeu d'une roue arrière motrice 19 et d'un pignon mené 20 solidaire de ladite roue arrière 19, cette dernière étant entraînée en rotation par une chaîne de transmission 21 s'étendant entre les pignons menant 13 et mené 20 en formant deux brins, l'un dit supérieur tendu 22 qui transmet le couple moteur à la roue arrière 19 et l'autre inférieur dit de retour 23. Dans cet exemple particulier de réalisation, la biellette 18 s'étend globalement verticalement et la biellette 17 s'étend globalement horizontalement, de sorte que les biellettes 17 et 18 s'étendent sensiblement perpendiculairement l'une par rapport à l'autre et l'intersection de la droite D1 passant par les axes 17a et 17b de la biellette 17 et de la droite D2 passant par les axes 18a et 18b de la biellette 18 est située dans le quadrant postérieur supérieur d'un repère défini par un axe horizontal H et un axe vertical V concourant à l'axe du pignon menant 13, c'est-à-dire que le point C se situe au-dessus de l'axe horizontal H et à droite de l'axe vertical V. On notera, par ailleurs, que le point C constitue le centre instantané de rotation du bras oscillant 15, le centre instantané de rotation C étant le point autour duquel le bras pivotant 15 pivote à chaque instant t.

Enfin, la bicyclette comprend un amortisseur 24 dont les extrémités sont solidaires de l'extrémité distale de la biellette 17, c'est-à-dire de l'extrémité la plus éloignée de son axe 17a, et respectivement d'une patte 25 soudée au tube oblique 3 à proximité du boîtier de pédalier 12, ladite patte 25 s'étendant dans le plan contenant les tubes 2 à 5 du cadre 1.

Ainsi, l'amortisseur 24 s'étend devant le tube oblique 3, c'est-à-dire entre ledit tube oblique 3 et la fourche portant la roue avant globalement parallèlement à ce dernier.

Il va de soi que l'amortisseur 24 peut être solidaire du bras oscillant et d'une patte soudée à l'un des tubes du cadre 1 et qu'il peut s'étendre entre les tubes 2,3 et 4 du cadre 1 dans le plan contenant ces derniers ou derrière le tube de selle 2 parallèlement à celui-ci, sans pour autant sortir du cadre de l'invention.

L'espace entre la roue arrière 19 et la sellerie, c'est-à-dire le tube de selle 2, la tige de selle 10 et la selle 11, est ainsi dégagé, permettant de fixer un garde-boue 26, représenté en traits pointillés, au tube de selle 2 par un collier de fixation 27 positionné entre le tube horizontal 4 et la biellette 18 afin d'éviter la projection de boue, d'eau, de graviers, etc .- sur le dos du cycliste.

Il va de soi que, en lieu et place ou en sus du garde-boue 26, un porte bagage peut être installé derrière la sellerie 2,10,11 au-dessus de la roue arrière 19.

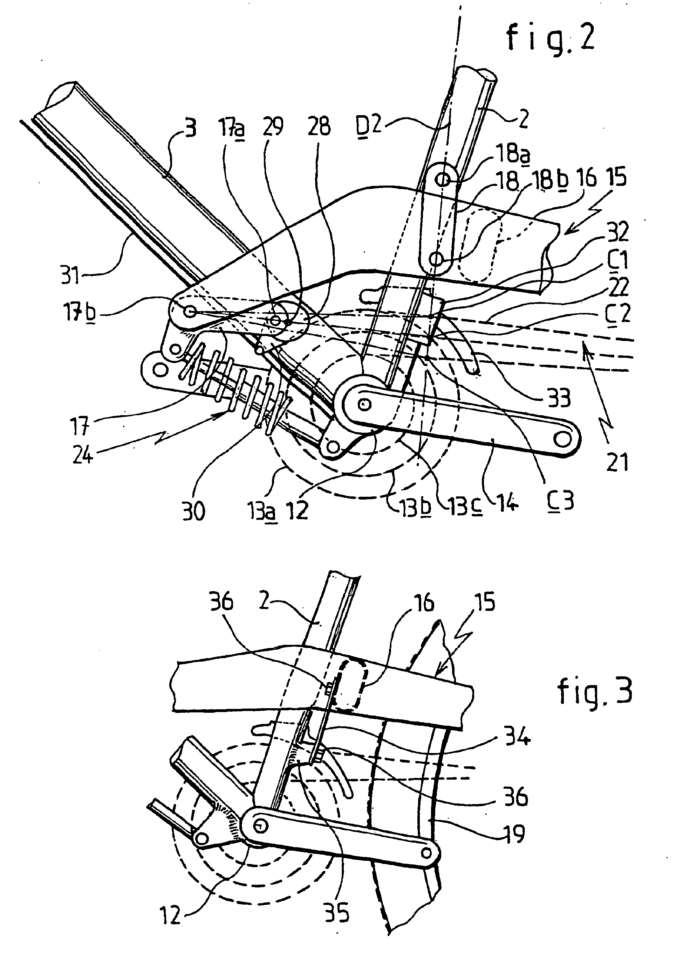

Selon une variante d'exécution du système anti-pompage conforme à l'invention, en référence à la figure 2, l'axe de rotation 17a de la biellette 17 solidarisant le bras oscillant 15 au tube oblique 3 est monté fou sur un excentrique 28 pivotant autour d'un axe 29 parallèle à l'axe des pignons menant 13, ledit excentrique 28 étant solidaire du tube oblique 3 et l'axe de rotation 17b de la biellette 17 étant solidaire du bras oscillant 15. L'excentrique 28 comprend, par ailleurs, un bras 30 dont l'extrémité libre est solidarisée par tout moyen connu à un câble tendu 31, s'étendant parallèlement au tube oblique 3 devant ce dernier relié à un boîtier de commande 32 d'un dérailleur 33 permettant de faire passer la chaîne d'un premier pignon 13a dit grand plateau vers un second pignon 13b dit plateau intermédiaire, ou vers un troisième pignon 13c dit petit plateau, ledit câble 31 passant sous le boîtier de pédalier 12. Ainsi, la chaîne 21 étant initialement sur le grand plateau 13a correspondant à la position C₁ du centre instantané de rotation du bras oscillant 15, le relâchement du câble 31 qui permet le passage de la chaîne 21 depuis le grand plateau 13a vers le plateau intermédiaire 13b provoque la rotation de l'excentrique 28 dans le sens inverse des aiguilles d'une montre entraînant en rotation la biellette 17 autour de son axe 17b dans le sens des aiguilles d'une montre de telle sorte que le centre instantané de rotation C₂ qui correspond à la droite D1 passant par les axes de rotation 17a et 17b de la biellette 17 et de la droite D2 passant par les axes de rotation 18a et 18b de la biellette 18 soit situé sur le brin supérieur 22 de la chaîne 21 entraînée par le plateau intermédiaire 13b. Par ailleurs, un nouveau relâchement du câble 31 du dérailleur 32 permettant le passage de la chaîne 21 depuis le plateau intermédiaire 13b vers le petit plateau 13c provoque la rotation de l'excentrique 28 dans le sens inverse des aiguilles d'une montre entraînant en rotation autour de son axe 17b la biellette 17 dans le sens des aiguilles d'une montre jusqu'à ce que le centre instantané de rotation C₃ du bras oscillant soit sur le brin supérieur de la chaîne 21. L'orientation de la biellette 18 restant globalement invariable au cours de ces changements de plateaux, les positions C₁, C₂ et C₃ du centre instantané de rotation du bras oscillant 15 sont situées sur la droite D2 passant par les axes de rotation 18a et 18b de ladite biellette 18. Par ailleurs, on comprend bien que la mise sous tension du câble 31 du dérailleur 32 permet le passage des positions C₃ à C₂ puis de C₂ à C₁ par une rotation dans le sens des aiguilles d'une montre de l'excentrique 28 entraînant la rotation de la biellette 17 par rapport à son axe 17b dans le sens inverse des aiguilles d'une montre lors du passage du petit plateau 13c vers le plateau intermédiaire 13b et respectivement lors du passage du plateau intermédiaire 13b vers le grand plateau 13a.

Il est bien évident que les moyens de variation de la position du centre instantané de rotation C décrits précédemment peuvent être adaptés à l'axe de rotation 18a de la biellette 18 solidarisant le bras oscillant 15 au tube de selle 2 sans pour autant sortir du cadre de l'invention.

Par ailleurs, il va de soi que les moyens de variation de la position du centre instantané de rotation C du bras oscillant 15 peuvent être pilotés par les moyens de commande du dérailleur avant 32 et/ou d'un dérailleur arrière non représenté sur les figures. De plus, les moyens de variation de la position du centre instantané de rotation C du bras oscillant 15 peuvent consister dans des moyens de variation de la raideur de l'amortisseur 24, la variation de la raideur provoquant une variation de la longueur de la tige de l'amortisseur 24 qui entraîne la rotation des biellettes 17 et 18 et par conséquent le déplacement du centre instantané de rotation C le long de la droite D2.

Par ailleurs, et selon une seconde variante d'exécution de la suspension anti-pompage conforme à l'invention, en référence à la figure 3, la biellette 18 solidarisant le bras oscillant 15 au tube de selle 2 peut être avantageusement remplacée par une lame flexible 34, telle qu'une lame en acier, en composite de fibres de carbone ou analogue, dont les extrémités sont solidarisées à l'entretoise 16 du bras oscillant 15 et à un bossage 35 du tube de selle 2 positionné entre le boîtier de pédalier 12 et le bras oscillant 15 en regard de la roue arrière 19, ladite lame 34 s'étendant alors globalement parallèlement au tube de selle 2. La lame flexible 34 est fixée à l'entretoise 16 et au bossage 15 par des vis 36 par exemple. De plus, on notera que la fixation de la lame 34 au tube de selle 2 étant située sous la fixation de ladite lame 34 au bras oscillant 15, le cadre 1 est suspendu sous ledit bras oscillant 15 de sorte que la lame 34 n'est sollicitée qu'en traction.

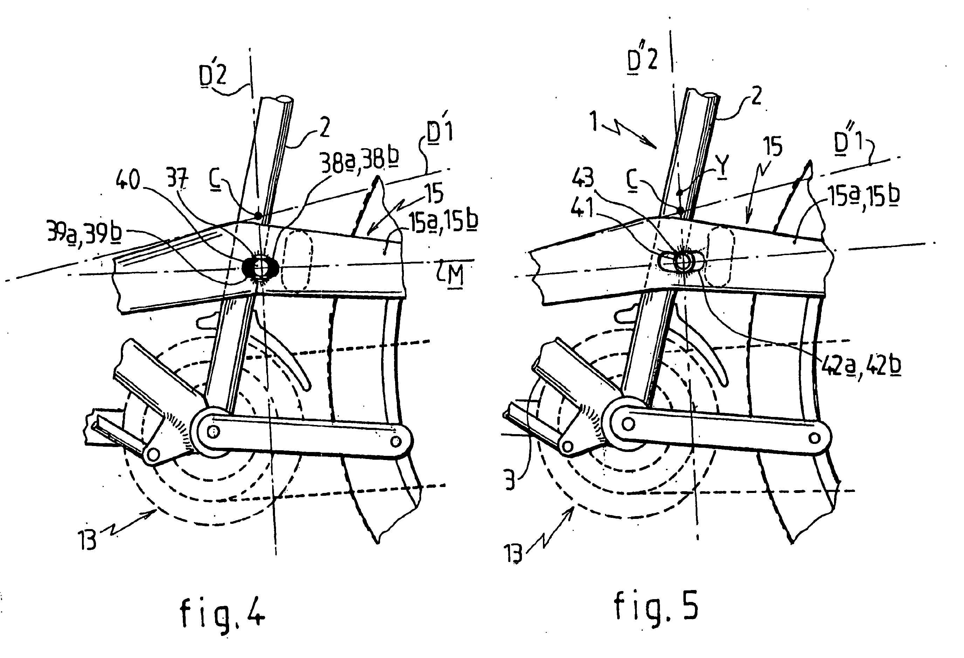

Selon une troisième variante d'exécution de la suspension arrière conforme à l'invention, en référence à la figure 4, l'articulation solidarisant le bras oscillant 15 au tube de selle 2 peut être avantageusement obtenue par une articulation du type à "Silentbloc" qui est une marque déposée, consistant en une entretoise tubulaire 37 soudée au tube de selle 2 de telle sorte que son axe soit parallèle à l'axe des pignons menants 13, deux "Silentblocs" oblongs 38a,38b, représentés en noir, obtenus dans du caoutchouc, encastrés dans des rainures oblongues 39a,39b pratiquées respectivement dans chaque demi-bras 15a, 15b du bras oscillant 15 et un axe 40 s'étendant dans les "Silentblocs" 38a, 38b et dans l'entretoise tubulaire 37 entre les demi-bras 15a, 15b du bras oscillant 15. L'axe longitudinal M des rainures oblongues 39a,39b s'étend globalement horizontalement et les "Silentblocs" 38a,38b présentent une élasticité maximale suivant ce même axe M de telle sorte que l'axe 40 puisse se déplacer dans les rainures 39a,39b suivant cette axe. Le centre instantané de rotation C du bras oscillant 15 consiste dans l'intersection de la droite D'1 passant par les axes des moyens d'articulation du bras oscillant 15 au tube oblique 3, non représentés sur cette figure, et de la droite D'2 orthogonale au grand axe M de l'articulation du type "Silentbloc" passant par le centre de son axe 40.

Selon une dernière variante d'exécution de la suspension arrière conforme à l'invention, en référence à la figure 5, les moyens d'articulation du bras oscillant 15 par rapport au cadre 1 de la bicyclette consistent dans une entretoise 41 tubulaire soudée au tube de selle 2 de telle sorte que son axe soit parallèle à l'axe des pignons menants 13, deux lumières arquées 42a, 42b pratiquées dans les deux demi-bras 15a,15b du bras oscillant 15, la concavité des lumières 42a,42b étant orientée vers le haut, c'est-à-dire vers la selle, et leurs axes longitudinaux s'étendant globalement horizontalement, et un axe 43 s'étendant dans l'entretoise tubulaire 41 et dans les lumières 42a, 42b, ledit axe 43 pouvant coulisser dans ces dernières. Le centre instantané de rotation C consiste alors dans l'intersection de la droite D"1 passant par les axes des moyens d'articulation du bras oscillant 15 au tube oblique 3 non représenté sur cette figure et de la droite D"2 passant d'une part par l'axe 42 et d'autre part par le centre Y de l'arc de cercle des lumières 42a et 42b.

Il est bien évident que les lumières 41a, et 41b peuvent consister dans des lumières globalement rectilignes dont l'axe longitudinal s'étend globalement horizontalement et que les moyens d'articulation du bras oscillant 15 au cadre 1 du vélo peuvent consister dans tout moyen équivalent connu sans pour autant sortir du cadre de l'invention.

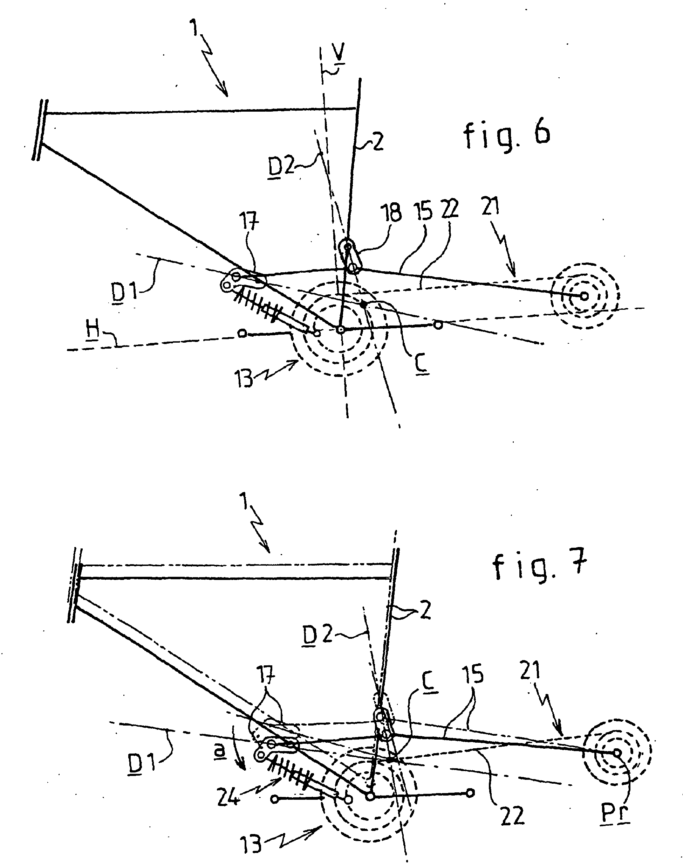

On expliquera maintenant le fonctionnement du système anti-pompage suivant l'invention en référence aux figures 6 à 8.

En référence à la figure 6 qui est une représentation partielle et schématique de la bicyclette représentée en position à vide sur la figure 1, c'est-à-dire lorsque la bicyclette est en appui sur le sol sans cycliste, le bras oscillant 15 est solidarisé au cadre 1 par les deux biellettes 17 et 18 respectivement solidaires du tube oblique 3 et du tube de selle 2 .de telle sorte que la biellette 18 soit sensiblement perpendiculaire au brin tendu 22 de la chaîne 21 et que le centre instantané de rotation C correspondant à l'intersection des droites D1 et D2 soit situé dans le quadrant postérieur supérieur du repère défini par un axe horizontal H et un axe vertical V concourant à l'axe du pignon menant 13 au-dessous du brin supérieur 22 de la chaîne 21.

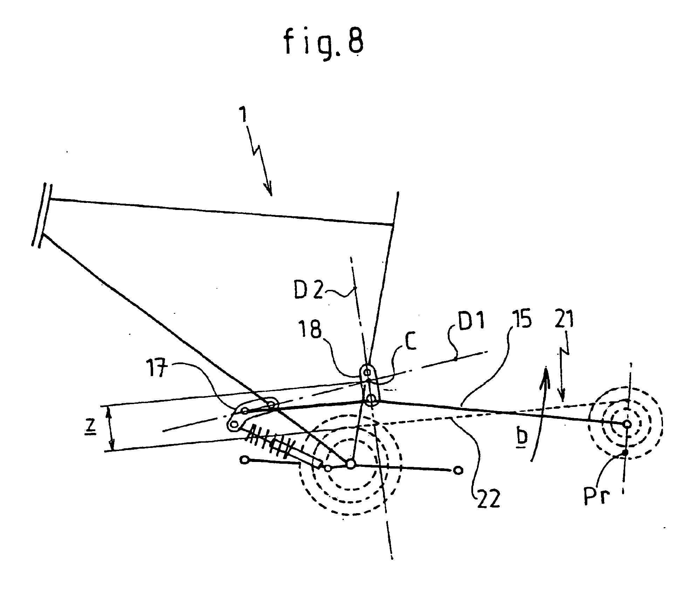

Lorsque le cycliste monte sur la bicyclette, c'est-à-dire lorsqu'il prend appui sur la selle et/ou les pédales, en référence à la figure 7, le cadre 1 s'enfonce par rapport à sa position d'équilibre à vide représentée en traits pointillés provoquant la rotation de la biellette 17 dans le sens inverse des aiguilles d'une montre, comme l'indique la flèche a, jusqu'à ce que le centre instantané de rotation C se situe sur le brin supérieur 22 de la chaîne 21, les caractéristiques de l'amortisseur 24 étant définis en fonction du poids du cycliste notamment pour que dans cette position d'équilibre dite statique, le brin supérieur 22 de la chaîne 21 passe par le centre instantané de rotation C du bras oscillant 15. Le couple moteur procuré par le pédalage du cycliste étant transmis à la roue motrice 19 par le brin supérieur 22 passant par le centre de rotation du bras oscillant 15, le moment appliqué au bras oscillant 15 est nul, de sorte que le couple moteur est intégralement transmis à la roue motrice lorsque le cycliste pédale.

Lorsque le cycliste change de rythme de pédalage en effectuant une relance par exemple, en référence à la figure 8, l'axe du moyeu 1 de la roue arrière se déplace globalement suivant une trajectoire rectiligne c'est-à-dire suivant un arc de cercle de grand rayon de courbure, vers le haut depuis une position de référence Pr, comme l'indique la flèche b. La position de référence Pr de l'axe du moyeu de la roue arrière correspondant à la position dudit axe lorsque la bicyclette est en position d'équilibre statique. Le déplacement de l'axe du moyeu de la roue arrière motrice provoque la rotation du bras oscillant 15 autour du centre instantané de rotation C qui se déplace globalement sur la droite D2 qui, à chaque instant t, s'étend globalement perpendiculairement au brin tendu 22 de la chaîne 21, c'est-à-dire que son orientation varie peu lors de la rotation du bras oscillant 15. Lorsque l'axe du moyeu de la roue arrière motrice se déplace vers le haut, le centre instantané de rotation du bras oscillant 15 se déplace vers le haut, de sorte que le brin supérieur tendu 22 de la chaîne 21 se situe en dessous dudit centre instantané de rotation C créant ainsi un moment de rappel proportionnel à la tension du brin supérieur 22 de la chaîne 21 et à la distance Z séparant le brin supérieur 22 du centre instantané de rotation C du bras oscillant 15 qui tend à ramener le bras oscillant 15 dans sa position initiale d'équilibre statique. On notera que, lorsque le bras oscillant 15 se déplace vers le bas, le centre instantané de rotation du bras oscillant 15 se déplace vers le bas de sorte que le brin supérieur tendu 22 de la chaîne se situe au-dessus dudit centre instantané de rotation C créant ainsi un moment de rappel proportionnel à la tension du brin supérieur tendu 22 et à la distance séparant ce dernier au centre instantané de rotation C du bras oscillant qui tend à ramener le dit bras oscillant .15 dans sa position d'équilibre statique. Ainsi, le moment de rappel du bras oscillant 15 vers sa position d'équilibre statique s'oppose, quel que soit son sens, et à chaque instant t, à la naissance du mouvement oscillatoire parasite dit de pompage créé par le pédalage du cycliste. De plus, lorsque la roue motrice revient dans sa position initiale Pr d'équilibre statique, le centre instantané de rotation 6 du bras oscillant 15 se situe à nouveau sur le brin supérieur 22 de la chaîne 21 de sorte que le moment appliqué au bras oscillant 15 est nul.

Il va de soi que le centre de rotation C du bras oscillant 15 peut être fixe, le châssis et/ou le bras oscillant comprenant alors des moyens pour que le brin supérieur 22 de la chaîne de transmission ou la droite le prolongeant, passe par le centre de rotation du bras oscillant, lorsque le véhicule est en position d'équilibre statique, et que ledit brin supérieur 22 soit situé en-dessous du centre de rotation du bras oscillant lorsque le moyeu de la roue motrice se situe au-dessus de sa position de référence.

Par ailleurs, il est bien évident que le bras oscillant 15 peut consister dans un bras triangulé, c'est-à-dire un bras comprenant trois tubes soudés entre eux pour former un triangle, l'axe du moyeu de la roue arrière étant porté par l'un des angles du triangle, solidarisé par deux biellettes dont les axes sont respectivement solidaires du tube de selle et du tube du bras oscillant 15 opposé au moyeu de la roue arrière, sans pour autant sortir du cadre de l'invention.

Enfin, il va de soi que le système anti-pompage conforme à l'invention peut être adapté à tous les types de véhicules du type comportant un châssis, un bras oscillant solidaire du châssis portant l'axe du moyeu d'au moins une roue motrice et un amortisseur dont les extrémités sont solidaires respectivement du châssis et du bras oscillant, tels qu'une moto, un quad, ou analogues, et que les exemples de véhicules que l'on vient de décrire ne sont que des illustrations particulières en aucun cas limitatives des applications du système anti-pompage conforme à l'invention.

## Revendications

1. - Suspension arrière d'un véhicule, tel qu'une bicyclette, une moto ou analogue, du type comportant un châssis (1), un bras oscillant (15) solidaire du châssis (1) portant l'axe du moyeu d'une roue motrice (19) et un amortisseur (24) dont les extrémités sont solidaires respectivement du châssis (1) et du bras oscillant (15), le couple moteur étant transmis à la roue motrice (19) par une chaîne (21) s'étendant entre un pignon menant (13) solidaire du châssis (1) et un pignon mené (20) solidaire de l'axe du moyeu de la roue motrice (19), ladite chaîne (21) entre les pignons menants (13) et menés (20) formant deux brins, l'un supérieur tendu (22) qui transmet le couple moteur à la roue motrice (19) et l'autre inférieur (23), dit de retour, le châssis (1) étant constitué d'un tube de selle (2) globalement vertical, d'un tube horizontal (4) et d'un tube oblique (3), le tube horizontal (4) et le tube oblique (3) étant solidaires d'un tube de direction (5) recevant une fourche (6) et l'axe du pignon menant (13) étant positionné à l'intersection du tube de selle (2) et du tube oblique (3), le châssis (1) et/ou le bras oscillant (15) comprenant des moyens pour que le brin supérieur (22) de la chaîne de transmission (21) ou la droite le prolongeant, passe par le centre instantané de rotation (C) du bras oscillant (15) lorsque le véhicule est en position d'équilibre statique, et que ledit brin supérieur (22) de la chaîne (21) soit situé en dessous du centre instantané de rotation (C) du bras oscillant (15) lorsque le moyeu de la roue motrice (19) se situe au-dessus de sa position de référence (Pr) correspondant à la position de l'axe du moyeu de la roue motrice (19) lorsque le véhicule est en position d'équilibre statique, **caractérisé en ce que** le bras oscillant (15) est solidarisé par au moins deux moyens d'articulation (17,18) au châssis (1) dont l'intersection des droites (D1, D2) passant par les axes (17a, 17b, 18a, 18b) de rotation de chaque moyen d'articulation (17,18) est située dans le quadrant postérieur supérieur d'un repère défini par un axe horizontal (H) et un axe vertical (V) concourant à l'axe du pignon menant (13) et **en ce que** les extrémités de l'amortisseur (24) sont solidaires respectivement du bras oscillant (15) ou du moyen d'articulation (17) solidarisant le bras oscillant (15) au tube oblique (3) et à une patte (25) soudée à l'un des tubes (2, 3, 4) du châssis (1), ladite patte (25) s'étendant dans le plan contenant les tubes (2 - 5) du châssis (1), ledit amortisseur (24) s'étendant devant le tube oblique (3), c'est-à-dire entre le tube oblique (3) et la fourche (6) portant la roue avant (8), globalement parallèlement à ce dernier ou entre les tubes (2 - 5) constituant le châssis (1) dans le plan contenant ces derniers.

2. - Suspension arrière suivant la revendication précédente **caractérisée en ce que**, lorsque l'axe du moyeu de la roue motrice (19) se déplace, le centre instantané de rotation (C) du bras oscillant (15) se déplace par rapport au brin supérieur (22) de la chaîne (21) globalement suivant une droite.

3. - Suspension arrière suivant la revendication précédente **caractérisée en ce que** la droite sur laquelle se déplace le centre instantané de rotation (C) du bras oscillant (15) s'étend globalement perpendiculairement au brin supérieur (22) de la chaîne (21).

4. - Suspension arrière suivant l'une quelconque des revendications 1 à 3 **caractérisée en ce que** le bras oscillant (15) est solidarisé au châssis (1) par deux biellettes (17,18) s'étendant globalement perpendiculairement l'une par rapport à l'autre.

5. - Suspension arrière suivant la revendication 4 **caractérisée en ce que** les biellettes (17,18) sont solidarisées respectivement au tube de selle (2) et au tube oblique (3) du châssis (1).

6. - Suspension arrière suivant l'une quelconque des revendications 4 et 5 **caractérisée en ce qu'**au moins une biellette (17,18) s'étend globalement verticalement lorsque le véhicule est en position d'équilibre statique.

7. - Suspension arrière suivant l'une quelconque des revendications précédentes **caractérisée en ce que** le châssis (1) et/ou l'amortisseur (24) comprend des moyens pour faire varier la position du centre instantané de rotation (C) du bras oscillant (15) afin qu'en position d'équilibre statique, le brin supérieur (22) de la chaîne (21) ou la droite le prolongeant passe par le centre instantané de rotation (C) du bras oscillant (15) quelles que soient les dimensions du pignon menant et/ou mené.

8. - Suspension arrière suivant la revendication 7 **caractérisée en ce que** le châssis (1) comprend des moyens pour faire varier la position de l'axe de rotation(17a, 17b, 18a, 18b*)* d'au moins une biellette (17,18) solidarisant le bras oscillant (15) au châssis (1).

9. - Suspension arrière suivant la revendication 7 **caractérisée en ce que** l'amortisseur (24) comprend des moyens pour faire varier sa raideur.

10. - Suspension arrière suivant l'une quelconque des revendications 7 à 9 **caractérisée en ce que** les moyens de variation de la position du centre instantané de rotation (C) du bras oscillant (15) sont pilotés par les moyens de commande (31,32) d'un dérailleur (33) avant et/ou arrière.

## Claims

1. Rear suspension of a vehicle, such as a bicycle, motorcycle or similar, of the type comprising an underframe (1), a swing arm (15) integral with chassis (1), bearing the hub axle of a drive wheel (19) and a shock absorber (24) whose ends are respectively integral with underframe (1) and swing arm (15), the torque drive being transmitted to the drive wheel (19) via a chain (21) extending between an engaging sprocket (13) integral with underframe (1) and an engaged sprocket (20) integral with the hub axle of drive wheel (19), said chain (21) between the engaging sprocket (13) and engaged sprocket (20) forming two strands, one tensioned upper strand (22) transmitting the torque drive to the drive wheel (19) and a lower strand (23), so-called return strand, underframe (1) being formed of a globally vertical seat tube (2), of a top tube (4) and a down tube (3), top tube (4) and down tube (3) being integral with a head tube (5) bearing a fork (6), and the axle of engaging sprocket (13) being positioned at the intersection between seat tube (2) and down tube (3), underframe (1) and/or swing arm (15) comprising means so that upper strand (22) of transmission chain (21) or the straight line extending the same, passes through the instantaneous centre of rotation C of swing arm (15) when the vehicle is in a position of static equilibrium, and so that said upper strand (22) of chain (21) is positioned below the instantaneous centre of rotation C of swing arm (15) when the hub of drive wheel (19) is positioned above its reference position Pr corresponding to the position of the hub axle of drive wheel (19) when the vehicle is in a position of static equilibrium, **characterized in that** swing arm (15) is made integral via at least two articulation means (17,18) with underframe (1) whose intersection of straight lines D1,D2 passing through rotation axles (17a,17b,18a,18b) of each articulation means (17,18) is positioned in the upper posterior quadrant of a point defined by a horizontal axis H and a vertical axis V converging towards the axle of the engaging sprocket (13), and **in that** the ends of shock absorber (24) are respectively integral with swing arm (15) or articulation means (17) joining swing arm (15) to down tube (3) and with a hanger (25) welded to one of the tubes (2,3,4) of underframe (1), said hanger (25) extending along the plane containing tubes (2 to 5) of underframe (1), said shock absorber (24) extending in front of down tube (3) i.e. between down tube (3) and fork (6) bearing front wheel (8), globally parallel to the latter or between tubes (2 to 5) forming underframe (1) along the plane containing the latter.

2. Rear suspension according to the preceding claim, **characterized in that** when the hub axle of drive wheel (19) moves, the instantaneous centre of rotation C of swing arm (15) moves relative to upper strand (22) of chain (21) globally following a straight line.

3. Rear suspension according to the preceding claim, **characterized in that** the straight line along which moves the instantaneous centre of rotation C of swing arm (15), extends globally perpendicular to upper strand (22) of chain (21).

4. Rear suspension according to any of claims 1 to 3, **characterized in that** swing arm (15) is integral with underframe (1) via two connecting rods (17,18) extending globally perpendicular relative to one another.

5. Rear suspension according to claim 4 **characterized in that** connecting rods (17,18) are respectively integral with seat tube (2) and down tube (3) of underframe (1).

6. Rear suspension according to either of claims 4 and 5, **characterized in that** at least one connecting rod (17, 18) extends globally vertically when the vehicle is in a position of static equilibrium.

7. Rear suspension according to any of the preceding claims, **characterized in that** underframe (1) and/or shock absorber (24) comprise means to vary the position of the instantaneous centre of rotation C of swing arm (15) so that in a position of static equilibrium upper strand (22) of chain (21) or the straight line extending the same passes through the instantaneous centre of rotation C of swing arm (15) irrespective of the size of the engaging and/or engaged sprocket.

8. Rear suspension according to claim 7, **characterized in that** underframe (1) comprises means to vary the position of the rotation axle (17a,17b,18a,18b) of at least one connecting rod (17,18) joining swing arm (15) to underframe (1).

9. Rear suspension according to claim 7, **characterized in that** shock absorber (24) comprises means to adjust its stiffness.

10. Rear suspension according to any of claims 7 to 9, **characterized in that** the means for varying the position of the instantaneous centre of rotation C of swing arm (15) are piloted by control means (31,32) of a front and/or rear derailleur (33).

## Patentansprüche

1. Hintere Aufhängung eines Fahrzeugs, wie zum Beispiel von einem Fahrrad, einem Motorrad oder ähnlichem, vom Typ, umfassend einen Rahmen (1), einen Schwingarm (15), der mit dem Rahmen (1) verbunden ist und die Radnabenachse eines Antriebsrads (19) trägt und einen Stoßdämpfer (24), dessen Enden jeweils mit dem Rahmen (1) und dem Schwingarm (15) verbunden sind, wobei das Antriebsmoment auf das Antriebsrad (19) von einer Kette (21) übertragen wird, die sich zwischen einem mit dem Rahmen (1) verbundenen antreibenden Zahnrad (13) und einem mit der Radnabenachse des Antriebsrads (19) verbundenen angetriebenen Zahnrad (20) erstreckt, wobei die besagte Kette (21) zwischen dem antreibenden (13) und angetriebenen (20) Zahnrad zwei Stränge bildet, einen oberen gespannten Strang (22), der das Antriebsmoment auf das Antriebsrad (19) überträgt, und den anderen unteren Strang (23), Umkehrstrang genannt, wobei der Rahmen (1) von einem etwa vertikalen Sattelrohr (2), einem horizontalen Rohr (4) und einem schrägen Rohr (3) gebildet wird, wobei das horizontale Rohr (4) und das schräge Rohr (3) mit einem Steuerkopfrohr (5) verbunden sind, das eine Gabel (6) aufnimmt, und wobei die Achse des antreibenden Zahnrads (13) am Schnittpunkt des Sattelrohrs (2) und des schrägen Rohrs (3) positioniert ist wobei der Rahmen (1) und/oder der Schwingarm (15) Mittel umfasst, damit der obere Strang (22) der Übertragungskette (21) oder die ihn verlängernde Gerade durch das momentane Rotationszentrum (C) des Schwingarms (15) verläuft, wenn sich das Fahrzeug in Position statischen Gleichgewichts befindet, und damit sich der besagte obere Strang (22) der Kette (21) unterhalb des momentanen Rotationszentrums (C) des Schwingarms (15) befindet, wenn sich die Nabe des Antriebsrads (19) über ihrer Referenzposition befindet (Pr), die der Position der Radnabenachse des Antriebsrads (19) entspricht, wenn sich das Fahrzeug im Position statischen Gleichgewichts befindet, **dadurch gekennzeichnet, dass** der Schwingarm (15) mit mindestens zwei Gelenkmitteln (17, 18) mit dem Rahmen (1) verbunden ist, wobei sich der Schnittpunkt deren Geraden (D1, D2), der durch die Rotationsachsen (17a, 17b, 18a, 18b) jedes Gelenkmittels (17, 18) verläuft, im oberen hinteren Quadranten eines Bezugspunkts befindet, der von einer horizontalen Achse (H) und einer vertikalen Achse (V) bestimmt wird, der mit der Achse des antreibenden Zahnrads (13) zusammenläuft, und dadurch, dass die Enden des Stoßdämpfers (24) jeweils mit dem Schwingarm (15) oder dem Gelenkmittel (17) verbunden sind, das den Schwingarm (15) mit dem schrägen Rohr (3) verbindet, und mit einer Schelle (25) an einer der Röhren (2,3,4) des Rahmens (1) geschweißt würde, wobei sich die besagte Schelle (25) in der Ebene erstreckt, die die Rohre (2-5) des Rahmens (1) enthält, wobei sich der besagte Stoßdämpfer (24) vor dem schrägen Rohr (3) erstreckt, das heißt zwischen dem schrägen Rohr (3) und der das Vorderrad (8) tragenden Gabel (6), etwa parallel zu diesem oder zwischen den den Rahmen (1) bildenden Rohren (2-5) in der Ebene, die diese enthält.

2. Hintere Aufhängung nach vorangehendem Anspruch, **dadurch gekennzeichnet, dass**, wenn sich die Radnabenachse des Antriebsrads (19) bewegt, sich das momentane Rotationszentrum (C) des Schwingarms (15) in bezug auf den oberen Strang (22) der Kette (21) etwa gemäß einer Geraden bewegt.

3. Hintere Aufhängung nach vorangehendem Anspruch, **dadurch gekennzeichnet, dass** sich die Gerade, auf der sich das momentane Rotationszentrum (C) des Schwingarms (15) bewegt, etwa senkrecht zum oberen Strang (22) der Kette (21) erstreckt.

4. Hintere Aufhängung nach einem der Ansprüche 1 bis 3, **dadurch gekennzeichnet, dass** der Schwingarm (15) mit dem Rahmen (1) durch zwei Streben (17, 18) verbunden ist, die sich etwa senkrecht zueinander erstrecken.

5. Hintere Aufhängung nach Anspruch 4, **dadurch gekennzeichnet, dass** die Streben (17, 18) jeweils mit dem Sattelrohr (2) und dem schrägen Rohr (3) des Rahmens (1) verbunden sind.

6. Hintere Aufhängung nach einem der Ansprüche 4 und 5, **dadurch gekennzeichnet, dass** sich mindestens eine Strebe (17, 18) etwa vertikal erstreckt, wenn sich das Fahrzeug in Position statischen Gleichgewichts befindet.

7. Hintere Aufhängung nach einem der vorangehenden Ansprüche, **dadurch gekennzeichnet, dass** der Rahmen (1) und/oder der Stoßdämpfer (24) Mittel umfassen, um die Position des momentanen Rotationszentrums (C) des Schwingarms (15) zu variieren, damit der obere Strang (22) der Kette (21) oder die ihn verlängernde Gerade in Position statischen Gleichgewichts durch das momentane Rotationszentrum (C) des Schwingarms (15) verläuft, unabhängig von den Abmessungen des antreibenden und/oder angetriebenen Zahnrads.

8. Hintere Aufhängung nach Anspruch 7, **dadurch gekennzeichnet, dass** der Rahmen (1) Mittel umfasst, um die Position der Rotationsachse (17a, 17b, 18a, 18b) mindestens einer den Schwingarm (15) mit dem Rahmen verbindenden (1) Strebe (17, 18) zu variieren.

9. Hintere Aufhängung nach Anspruch 7, **dadurch gekennzeichnet, dass** der Stoßdämpfer (24) Mittel umfasst, um seine Straffheit zu variieren.

10. Hintere Aufhängung nach einem der Ansprüche 7 bis 9, **dadurch gekennzeichnet**, das die Mittel zur Variation der Position des momentanen Rotationszentrums (C) des Schwingarms (15) von Steuermitteln (31, 32) einer Kettenschaltung (33) vorn und/oder hinten gelenkt werden.
